# FASCICULE DE BREVET EUROPEEN

(11) **EP 2 067 698 B1**
(45) Date de publication et mention de la délivrance du brevet: **15.06.2011**
(21) Numéro de dépôt: 08170679.8
(22) Date de dépôt: 04.12.2008
(51) Int. Cl.: B64D 27/26

(54) **Suspension d'un turboréacteur à un aéronef**
Aufhängung eines Triebwerks an einem Luftschiff
Suspension of a jet engine to an aircraft

(30) Priorité: 07.12.2007 FR 0708556
(43) Date de publication de la demande: 10.06.2009
(73) Titulaire: SNECMA, 75015 Paris (FR)
(72) Inventeur: Chouard, Pierre-Alain, Jean-Marie, Philippe, Hugue, 75018, PARIS (FR); Lefort, Guillaume, 75012, PARIS (FR)
(74) Mandataire: Bloch & Bonnétat

(56) Documents cités:
- EP-A- 0 527 672
- EP-A- 1 493 663
- WO-A-2006/097484

## Description

La présente invention concerne le domaine des moteurs à turbine à gaz, en particulier des turboréacteurs à soufflante avant, et de leur accrochage à un aéronef.

Un turboréacteur à soufflante avant comprend un rotor de soufflante de grand diamètre logé dans un carter sur lequel est montée la manche d'entrée d'air. En aval le carter se prolonge par le carter du flux primaire de diamètre plus faible et constitué des divers carters de compresseurs, de chambre de combustion, de turbines et d'échappement. L'air entrant par la manche d'entrée d'air est comprimé à travers le rotor de soufflante puis divisé en des flux cylindriques concentriques. Selon un type de moteur connu le flux entrant est divisé en un flux primaire et un flux secondaire. Ce dernier contourne le moteur et est éjecté froid soit en flux séparé soit après mélange avec le flux primaire en aval des étages de turbine. Le flux primaire subit une compression supplémentaire avant d'être mélangé à un carburant pour produire des gaz chauds dans une chambre de combustion. Les gaz chauds alimentent les étages successifs de turbine qui entraînent en rotation autour de l'axe du moteur la soufflante et les étages de compression de l'air. Le flux primaire est ensuite éjecté pour fournir une partie de la poussée. Celle-ci est produite en majeure partie par le flux secondaire. Le rapport des débits entre le flux secondaire et le flux primaire, est désigné taux de dilution. Avec l'augmentation de la puissance des moteurs on est conduit à concevoir des moteurs à fort taux de dilution pour lesquels le rapport des diamètres entre le carter de soufflante et le carter du flux primaire est important. L'invention ne concerne pas seulement les moteurs à double flux mais vise aussi les moteurs multiflux.

Les moteurs, selon un mode d'accrochage conventionnel, sont fixés à l'aéronef, sur ou sous l'aile ou au fuselage, par l'intermédiaire d'un pylône. Le pylône a une forme de caisson allongé et rigide capable de transmettre les efforts selon les trois directions axiale, latérale et verticale entre le moteur et la structure de l'aéronef, l'axe étant celui du moteur. L'accrochage du moteur au pylône est localisé en deux plans verticaux, un premier plan à l'avant passant par le carter intermédiaire et à l'arrière passant par le carter d'échappement. Ces deux carters sont des éléments structuraux du moteur supportant notamment les paliers, respectivement avant et arrière. En ce qui concerne le plan avant, on distingue deux modes d'accrochage distincts actuellement mis en oeuvre sur les aéronefs civils, un premier sur la virole externe du carter intermédiaire, et un second au niveau du moyeu de ce même carter.

Des exemples de réalisation d'accrochage au pylône sont donnés par les demandes de brevets publiées sous les références EP1493663, WO2006/097484 et EP0527672, avec une attache soit sur la virole du carter intermédiaire soit sur son moyeu.

La présente invention pour ce qui concerne le mode d'accrochage avant, vise selon un premier mode de réalisation une attache par la virole externe du carter intermédiaire et selon un second mode de réalisation une attache par le moyeu.

Dans le cas de suspensions isostatiques, les efforts sont transmis par des bielles, des biellettes ou pièces équivalentes reliant le moteur au pylône en étant attachées par des liaisons de type à rotule de manière à travailler en traction ou en compression uniquement. L'agencement est prévu pour assurer la transmission des efforts selon les trois directions axiale Fx, verticale Fz et latérale Fy, ainsi que les moments selon ces trois directions Mx, My et Mz respectivement. Outre les attaches entre le pylône et les carters, intermédiaire et d'échappement, la suspension comprend également des bielles de transmission de poussée reliant le moyeu du carter intermédiaire à l'attache arrière ou bien au pylône par une structure désignée pyramide.

Les problèmes associés à l'accrochage des moteurs sont les distorsions du carter, d'une part celles résultant des transmissions ponctuelles des efforts, les points d'attaches de type bielle et chape formant des zones de faible étendue, d'autre part celles résultant du déport de la transmission de poussée sur le pylône par rapport au vecteur poussée le long de l'axe du moteur. Le couple formé par les deux forces induit une flexion du moteur le long de son axe qui altère les jeux entre les parties fixes et tournantes avec détérioration des performances et une incidence sur la consommation spécifique. Il s'ensuit également une usure des pièces par frottement et une réduction de la durée de vie du moteur. Le phénomène est encore plus marqué, avec des amplitudes de déformations plus grandes, sur les moteurs à fort taux de dilution et au rapport des diamètres plus important entre le carter de soufflante et le carter de flux primaire.

La présente invention a donc pour objet une suspension de turboréacteur à soufflante avant à un pylône, de type isostatique, permettant de réduire les distorsions de carcasse locales.

On parvient à cet objectif avec une suspension isostatique de turboréacteur à un pylône d'aéronef, le turboréacteur comprenant une soufflante avant, un carter intermédiaire en aval de la soufflante avec une virole externe et un moyeu reliés entre eux par des bras radiaux et un carter d'échappement avec une virole externe sur un même axe XX, la suspension comprenant une attache avant sur le carter intermédiaire, une attache arrière avec au moins deux biellettes reliées à la virole externe du carter d'échappement, une paire de bielles de transmission de poussée étant fixée à l'amont au moyeu du carter intermédiaire, caractérisée par le fait que le plan formé par les dites deux biellettes de l'attache arrière est incliné par rapport au plan du carter d'échappement.

L'inclinaison de ces biellettes permet de réduire les efforts et les distorsions dans les carters avant du moteur et ainsi d'optimiser la masse et le comportement de ces carters de grands diamètres.

Divers modes de réalisation sont possibles en relation avec cette caractéristique. Les caractéristiques suivantes peuvent être prises seules ou en combinaison.

L'attache arrière comprend une poutre transversale, les deux biellettes d'attache arrière reliant les extrémités de la poutre transversale à la virole externe du carter d'échappement.

L'attache arrière comprend une biellette de reprise de couple Mx selon l'axe XX disposée entre les deux biellettes d'attache arrière.

Les deux biellettes d'attache arrière sont reliées au carter d'échappement par des liaisons à chape et rotule dont les oreilles sont disposées dans un plan incliné par rapport au plan du carter d'échappement.

Ledit plan formé par les deux biellettes d'attache arrière coupe l'axe du turboréacteur à proximité du centre de gravité du moteur. Cette disposition est particulièrement avantageuse pour les moteurs dont le centre de gravité est disposé plus en arrière.

Les deux bielles de transmission de poussée sont fixées à leur extrémité aval à ladite poutre transversale d'attache arrière. Plus particulièrement les deux bielles de transmission de poussée sont reliées à l'attache arrière par un palonnier.

Selon un autre type de structure les deux bielles de transmission de poussée sont fixées, à leur extrémité aval, au dit caisson, plus particulièrement à une structure de type pyramide d'attache au caisson.

Plus particulièrement le plan des bielles de transmission de poussée et le plan des biellettes d'attache arrière convergent sur l'axe du moteur.

Le plan des bielles de transmission de poussée et le plan des biellettes d'attache arrière convergent à proximité de l'axe du moteur en un point de convergence. De préférence, le point de convergence est alors à une distance en hauteur de l'axe moteur XX inférieure au quart du diamètre de soufflante.

L'attache avant comprend une poutre transversale et deux biellettes d'attache avant reliant la poutre à la virole externe du carter intermédiaire.

L'attache avant comprend une biellette de reprise de couple Mx selon l'axe XX entre les deux biellettes d'attache avant.

L'attache avant dispose d'un système de reprise du couple moteur Mx selon l'axe XX par une bielle de type boomerang

Avec un tel agencement on crée un système de suspension qui génère moins de distorsion dans le plan avant du moteur.

La solution de l'invention présente ainsi des avantages induits par l'absence ou au moins la réduction de distorsion des carters. On peut réduire la masse de l'ensemble propulsif, par exemple grâce à la diminution de la masse de l'attache avant qui reprend très peu d'effort. La réduction des distorsions induit comme on l'a expliqué plus haut une réduction de la consommation spécifique.

Par point de convergence, on doit comprendre que l'on ne se limite pas à une convergence stricte sur l'axe. La position de ce point peut varier d'une certaine hauteur par rapport à l'axe du moteur, en fonction des autres chargements, comme le poids du moteur ou les efforts aérodynamiques de manche.

Les biellettes de reprise de couple peuvent être de type connu sous le nom de boomerang et décrits dans la demande de brevet déposé par la demanderesse EP A 1493663.

De préférence, la suspension comprend deux bielles de transmission de poussée reliées en aval à l'attache arrière par un palonnier, directement au pylône, ou encore sur la poutre de la suspension avant dans le cas d'une attache de type moyeu.

On décrit maintenant plus en détail l'invention, en faisant ressortir éventuellement d'autres caractéristiques et avantages, en référence aux dessins annexés sur lesquels :
La figure 1 représente une vue de côté d'un turboréacteur accroché à un pylône, conformément à un mode de réalisation de l'invention où le plan des biellettes de l'attache arrière est incliné par rapport au plan du carter d'échappement.
La figure 2 représente la suspension avant du moteur de la figure 1 en perspective isométrique, vue de trois quart arrière.
La figure 3 représente la suspension arrière du moteur de la figure 1 en perspective isométrique, vue de trois quart avant.
La figure 4 montre une vue de côté d'un turboréacteur accroché à un pylône conformément à un autre mode de réalisation de l'invention où le plan des biellettes de l'attache arrière et le plan des bielles de transmission de poussée sont convergents en un point sur l'axe moteur.
La figure 5 représente l'attache avant du moteur représenté sur la figure 4.
La figure 6 montre une vue de côté d'un turboréacteur accroché à un pylône conformément à un autre mode de réalisation de l'invention où le plan des biellettes de l'attache arrière et le plan des bielles de transmission de poussée sont convergent en un point sur l'axe du moteur, les bielles de transmission de poussée étant fixées au pylône.
La figure 7 montre le détail de l'attache des bielles de transmission de poussée au pylône selon le mode de réalisation de la figure 6.

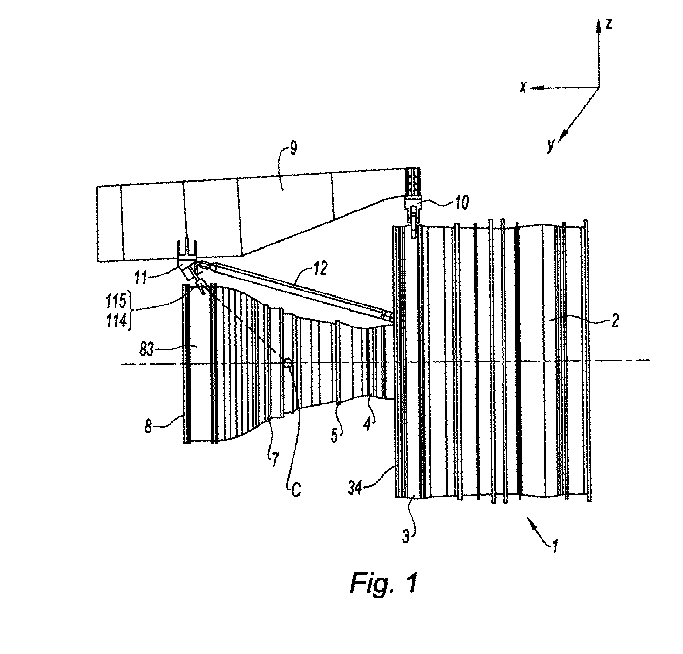

Comme on le voit sur la figure 1, le turboréacteur 1 est du type à turbosoufflante avant dont on a représenté le carter de soufflante 2. En aval du carter 2 se trouve le carter intermédiaire 3 dont on n'aperçoit que la virole externe 34. L'amont, correspondant à l'admission d'air, est sur la droite par rapport à la figure 1.

En aval, on voit le carter 4 de la section de compression. Cette section communique avec la chambre de combustion 5, de type annulaire. Les étages de turbines 7 sont situés en aval de la chambre de combustion. Le moteur se termine par le carter d'échappement 8, pièce structurale supportant les paliers arrières connue en soi. Le repère par rapport auquel on oriente les axes et les composantes des efforts et des moments, comprend l'axe Ox parallèle à l'axe XX du moteur celui étant supposé horizontal et de l'amont vers l'aval ; l'axe Oz est l'axe vertical et l'axe Oy est l'axe transversal.

Le moteur est fixé à la structure de l'aéronef, aile ou fuselage, par l'intermédiaire, comme cela est connu, d'un pylône 9. La forme générale de ce dernier est celle d'un caisson parallélépipédique rigide. Il assure la transmission de tout effort entre le moteur et la structure.

La suspension qui est l'ensemble des pièces ou organes assurant la fixation du moteur et la transmission des efforts entre le moteur et le pylône, comprend une attache avant 10 entre la virole externe 34 du carter intermédiaire 3 et le pylône 9, une attache arrière 11 entre la virole externe 83 du carter d'échappement 8 et le pylône. La reprise ou transmission de poussée est effectuée au moyen de deux bielles 12 et 12' pouvant à l'aval être reliées entre elles par un palonnier.

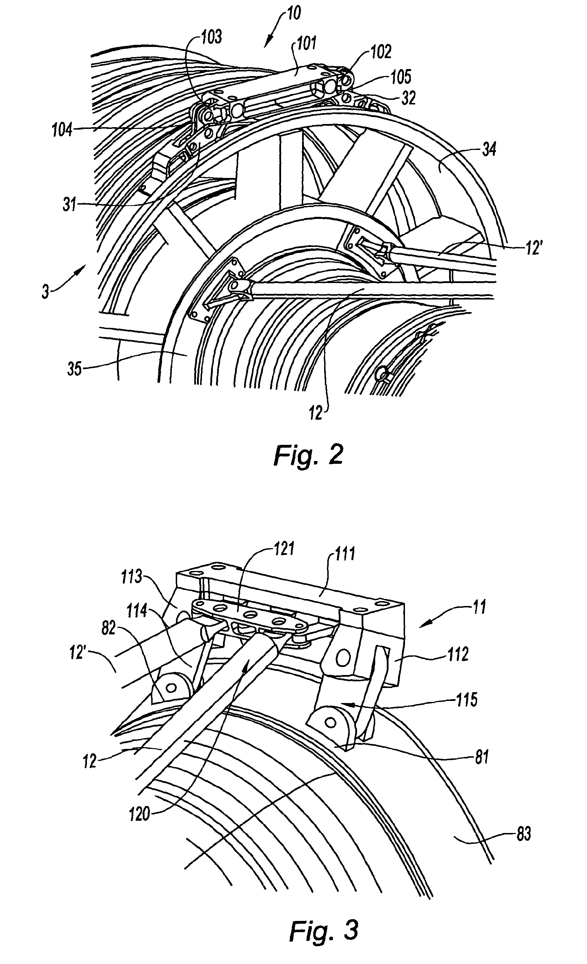

Ces trois éléments sont visibles plus en détail sur les figures 2 et 3,

L'attache avant 10 comprend une poutre 101 pourvue sur la face supérieure de moyens de fixation au pylône 9, tels que des boulons non visibles sur les figures. La poutre est disposée transversalement par rapport à l'axe XX. Elle comprend deux chapes d'extrémité, 102 et 103 respectivement, sur lesquelles sont articulées deux biellettes, 104 et 105. A leur extrémité opposée, ces dernières sont montées sur deux chapes 31 et 32 solidaires de la virole externe 34 du carter intermédiaire 3. Les biellettes sont montées sur les chapes par des liaisons à rotule comme cela est en soi connu. Un axe traverse les deux oreilles de la chape et est pourvu d'une bague à surface sphérique. La biellette est elle-même pourvue d'une bague à surface sphérique complémentaire de la bague sur l'axe. De cette façon la biellette reste libre autour des trois directions orthonormées et ne transmet que les efforts en traction ou compression le long de son propre axe.

L'ensemble des deux biellettes 104 et 105 de la suspension avant permet de transmettre les efforts Fy, Fz selon les directions Oy et Oz sur l'attache avant.

Disposée entre les deux premières biellettes 104 et 105, la suspension peut comprendre une biellette de reprise de couple montée comme les deux précédentes entre deux chapes. Cet agencement permettrait la reprise du couple Mx.

L'attache arrière 11 comprend, selon cet exemple, une poutre transversale 111 pourvue de moyens de fixation au pylône 9, tels que des boulons non visibles sur les figures. La poutre comprend deux chapes d'extrémité 112 et 113 sur lesquelles sont montées deux biellettes 114 et 115 d'attache arrière.

À leur extrémité opposée, ces dernières sont montées sur deux chapes 81 et 82 respectivement solidaires de la virole externe 83 du carter d'échappement 8. Les biellettes d'attache arrière sont montées sur les chapes par le moyen de liaison à rotule comme pour l'attache avant. Selon que la reprise de couple Mx est assurée par la suspension avant ou non, une biellette supplémentaire de reprise de couple peut être disposée entre les deux biellettes 114 et 115.

La suspension comprend enfin deux bielles de reprise ou transmission de poussée, 12 et 12'. Ces deux bielles sont fixées à leur extrémité amont sur le moyeu 35 du carter intermédiaire 3, en deux points symétriques par rapport au plan vertical passant pas l'axe XX, comme on le voit sur la figure 2. A leur extrémité aval, les bielles sont montées, selon cet exemple, sur une barre transversale 121 à ses deux extrémités. Les liaisons sont ici aussi du type à chape et rotule. La barre transversale 121 forme un palonnier 120 en étant reliée en son milieu à la poutre 111 par une liaison pivot. Le montage en palonnier, en soi bien connu, permet d'équilibrer les efforts entre les deux bielles 12 et 12' et d'assurer la transmission de la poussée dans la direction axiale. Dans l'exemple représenté le palonnier comprend deux attaches latérales en attente

Ce montage est ainsi isostatique.

Conformément à l'invention, le plan formé des deux biellettes 114 et 115 d'attache arrière est incliné vers l'amont par rapport au plan du carter d'échappement 8. Son intersection C avec l'axe XX est située entre le plan du carter d'échappement 8 et l'intersection du plan des bielles 12 avec l'axe XX. Pour cela on a incliné les biellettes 114 et 115 par rapport au plan vertical (Oz ; Oy) passant par l'attache arrière 11.

Par cette disposition, la résultante des efforts dans le plan de l'attache avant (Oz ; Oy) est faible. On réduit ainsi la distorsion de carcasse due aux déformations du carter intermédiaire.

Conformément à une autre caractéristique de l'invention, les chapes 81 et 82 sur la virole externe 84 du carter d'échappement sont inclinées par rapport à la verticale, les oreilles étant dans le prolongement de l'axe des biellettes 114 et 115. Les oreilles sont situées dans des plans qui sont perpendiculaires par rapport au plan (Ox ; Oz) et inclinés par rapport au plan (Oy ; Oz).

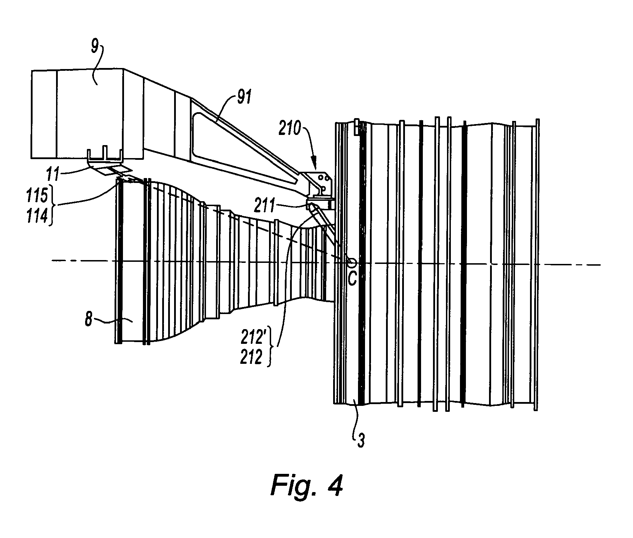

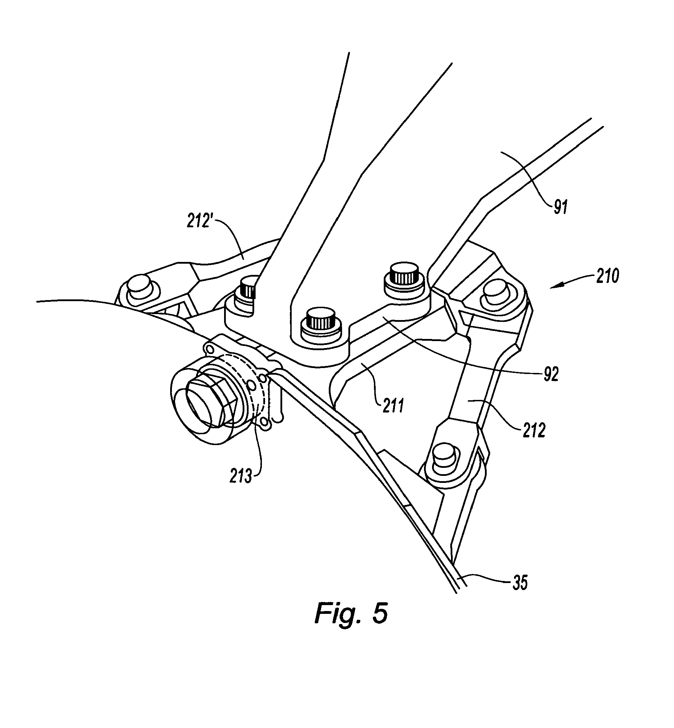

Conformément à un autre mode de réalisation de l'invention représenté sur les figures 4 et 5, la suspension avant est du type à attache sur le moyeu, connue en soi. L'attache avant 210 dont le détail est visible sur la figure 5 comprend une plaque 211 qui est fixée par boulonnage à une plaque 92 solidaire d'un structure de type pyramide 91 prolongeant le caisson 9. La plaque est rattachée au moyeu d'une part par des bielles de transmission de poussée 212 et 212' et d'autre part par un groin 213.

Les bielles 212 et 212' sont fixées en amont au moyeu 35 par une liaison à chape et rotule et en aval à des chapes ménagées sur la plaque 211. Les deux bielles sont disposées de part et d'autre du plan vertical passant par l'axe moteur. Les efforts dans le plan (Oy, Oz) passant par le carter intermédiaire 3 sont repris par le groin 213 qui est un axe solidaire de la plaque 211 orienté axialement et relié au moyeu par une rotule qui ne transmet que les efforts selon les directions Oy et Oz.

Conformément à l'invention, le plan des biellettes d'attache arrière 115 et 114 est incliné vers l'amont et, selon ce mode de réalisation, converge avec le plan des bielles de transmission de poussée 212 et 212' en un point C qui de préférence est situé sur l'axe mais qui peut en être écarté légèrement.

De préférence le point de convergence est disposé à proximité du centre de gravité. En particulier un tel agencement est efficace pour les systèmes propulsifs ayant un centre de gravité déporté vers l'arrière.

Avec une telle convergence on crée un système de suspension tel que la poussée non reprise sur l'axe moteur XX n'engendre pas de déformation des bras du carter intermédiaire. En effet, en raisonnant dans le plan de symétrie vertical contenant l'axe moteur XX, on peut effectuer un bilan des moments au point de convergence. Les biellettes arrière, les barres de transmission de poussée et la poussée elle-même exercent un moment à bras de levier nul, par définition même du point de convergence. Le seul effort qui potentiellement exerce un moment car son bras de levier par rapport au point de convergence est non nul est l'effort dans le plan de suspension avant. Toutefois, le moteur étant en équilibre, le bilan des moments est égal à zéro. Nécessairement alors l'effort dans le plan de suspension avant est nul et les carters avant subissent peu de déformation. La solution de l'invention présente ainsi des avantages induits par l'absence ou au moins la réduction de distorsion des carters. On peut réduire la masse de l'ensemble propulsif, par exemple grâce à la diminution de la masse de l'attache arrière qui reprend très peu d'effort. La réduction des distorsions induit comme on l'a expliqué plus haut une réduction de la consommation spécifique.

Par point de convergence, on doit comprendre que l'on ne se limite pas à une convergence stricte sur l'axe. La position de ce point peut varier d'une certaine hauteur par rapport à l'axe du moteur, en fonction des autres chargements, comme le poids du moteur ou les efforts aérodynamiques de manche. Cette hauteur est inférieure au quart du diamètre d'entrée de soufflante du moteur. Dans ce cas le bilan des moments n'est pas nul mais proche de zéro.

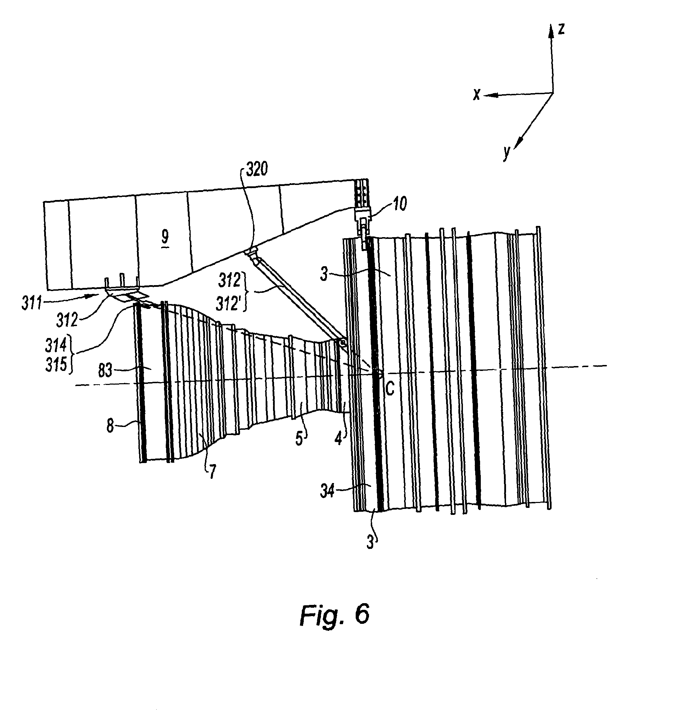

Selon une variante représentée sur la figure 6, la suspension est du type à attache avant sur le carter de soufflante et les bielles de transmission de poussée sont reliées à l'aval directement au caisson par un palonnier.

Le moteur est accroché au pylône 9 par une attache avant 10 sur la virole externe 34 du carter intermédiaire 3. Il s'agit du même type d'attache que dans la variante de la figure 2.

L'attache arrière 311 relie la virole externe 83 du carter d'échappement au pylône. Elle comprend deux biellettes 314 et 315 entre une poutre transversale 312 fixée au pylône et des chapes solidaires de la virole externe 83. Comme pour les autres modes de réalisation, le montage des biellettes 314 et 315 est fait de telle façon qu'elles se trouvent dans un même plan incliné par rapport au plan (Oz, Oy) passant par le carter d'échappement. Avantageusement les chapes de liaison à la virole externe 83 sont également inclinées avec le même angle que les biellettes 314 et 315.

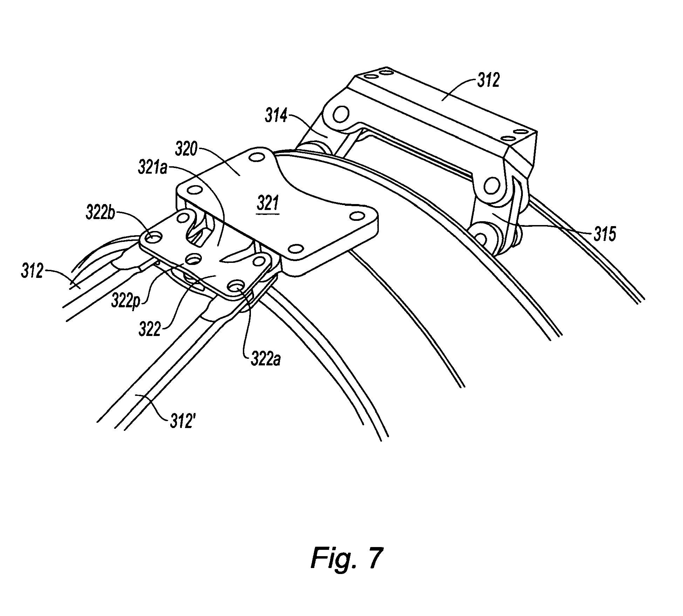

Les deux bielles de transmission de poussée 312 et 312' relient le moyeu du carter intermédiaire 3 au pylône 9. A l'amont l'attache de ces bielles au moyeu 35 est la même que celle présentée sur la figure 2 pour les bielles 12 et 12'. À l'aval les deux bielles sont fixées au pylône 9 par un palonnier. 320. Le palonnier est montré sur la figure 7.

Les deux bielles 312 et 312' sont montées par des liaisons à rotule 322a et 322b respectivement au palonnier 322 transversal qui est lui-même monté par un pivot à une patte solidaire de la poutre 321. Les liaisons ne sont pas montrées ; seuls les orifices les recevant sont illustrés afin de rendre le dessin plus clair. Des liaisons en attente sont également prévues dans cet exemple mais elles ne sont pas l'objet de l'invention. La poutre 321 est boulonnée directement sur le pylône. Cette disposition permet de faire converger les directions des efforts sur les biellettes 314 et 315 de l'attache arrière d'une part et les directions des efforts sur les bielles 312 et 312'de transmission de la poussée d'autre part. Ces directions convergent en un point C sur l'axe moteur ou au moins à proximité de l'axe du moteur.

## Revendications

1. Suspension isostatique de turboréacteur à un pylône (9) d'aéronef, le turboréacteur comprenant une soufflante avant (2), un carter intermédiaire (3) en aval de la soufflante avec une virole externe (34) et un moyeu (35) reliés entre eux par des bras radiaux (36) et un carter d'échappement (8) avec une virole externe (83) sur un même axe XX, la suspension comprenant une attache avant (10 ; 210) sur le carter intermédiaire, une attache arrière (11 ; 311) avec au moins deux biellettes (114, 115 ; 314,315) d'attache arrière reliées à la virole externe (83) du carter d'échappement (8), une paire de bielles (12, 12' ; 212,212' ; 312,312') de transmission de poussée étant fixée à l'amont au moyeu (35) du carter intermédiaire (3), **caractérisée par le fait que** le plan formé par les deux biellettes (114, 115 ; 314, 315) de l'attache arrière (11 ; 311) est incliné vers l'amont par rapport au plan du carter d'échappement (8).

2. Suspension selon la revendication 1 dont l'attache arrière comprend une poutre transversale (111 ; 312), les deux biellettes (114, 115 ; 314 ; 315) d'attache arrière reliant les extrémités de la poutre à la virole externe (83) du carter d'échappement.

3. Suspension selon la revendication 2 dont l'attache arrière (11 ; 311) comprend une biellette de reprise de couple Mx selon l'axe XX disposée entre les deux biellettes d'attache arrière.

4. Suspension selon l'une des revendications 2 et 3 dont les deux biellettes (114, 115 ; 314 ; 315) d'attache arrière sont reliées au carter d'échappement par des liaisons à chape dont les oreilles sont disposées dans un plan incliné par rapport au plan du carter d'échappement.

5. Suspension selon l'une des revendications précédentes dont ledit plan formé par les deux biellettes d'attache arrière coupe l'axe du turboréacteur à proximité du centre de gravité du moteur.

6. Suspension selon l'une des revendications 2 à 5 dont les deux bielles (12, 12') de transmission de poussée sont fixées à leur extrémité aval à ladite poutre transversale (111).

7. Suspension selon la revendication 6 dont les deux bielles (12, 12') de transmission de poussée sont reliées à l'attache arrière par un palonnier (210).

8. Suspension selon l'une des revendications précédentes dont les bielles de transmission de poussée (312, 312') sont, à l'aval, liées au pylône (9)

9. Suspension selon la revendication 8 dans laquelle les bielles de transmission de poussée (312, 312') et les biellettes (314, 315) de la suspension arrière convergent sur ou à proximité de l'axe du moteur en un point de convergence (C).

10. Suspension selon la revendication précédente dont le point de convergence (C) est à une distance en hauteur de l'axe moteur XX inférieure au quart du diamètre de soufflante.

11. Suspension selon la revendication 1 dont les deux bielles de transmission de poussée (212, 212') sont fixées à leur extrémité aval au pylône par l'attache avant (210).

12. Suspension selon la revendication 11 dont l'attache avant (210) est reliée au moyeu (35) du carter intermédiaire.

13. Suspension selon la revendication 11 ou 12 dont le plan des bielles (212, 212') de transmission de poussée et le plan des biellettes (114, 115) d'attache arrière convergent sur ou à proximité de l'axe du moteur en un point de convergence (C).

14. Suspension selon la revendication précédente dont le point de convergence (C) est à une distance en hauteur de l'axe moteur XX inférieure au quart du diamètre de soufflante.

15. suspension selon l'une des revendications 1 à 10 dont l'attache (10) avant comprend une poutre transversale et deux biellettes d'attache avant reliant la poutre à la virole du carter intermédiaire.

16. Suspension selon la revendication 15 dont l'attache avant (10) comprend une biellette de reprise de couple Mx selon l'axe XX entre les deux biellettes d'attache avant.

17. Suspension selon l'une des revendications 15 et 16 dont l'attache avant dispose d'un système de reprise du couple moteur Mx selon l'axe XX par une biellette de type boomerang.

18. Turboréacteur pour aéronef, **caractérisé en ce qu'**il comporte une suspension selon l'une des revendications 1 à 17.

## Claims

1. An isostatic suspension for mounting a turbojet engine on a pylon (9) of an aircraft, the turbojet engine comprising a front fan (2), an intermediate casing (3) downstream of the fan with an outer shell (34) and a hub (35) interconnected by radial arms (36), and an exhaust casing (8) with an outer shell (83) on the same axis XX, the suspension comprising a front attachment (10; 210) on the intermediate casing, a rear attachment (11; 311) with at least two rear attachment links (114, 115; 314, 315) connected to the outer shell (83) of the exhaust casing (8), a pair of thrust bars (12, 12'; 212, 212'; 312, 312') being fixed at their upstream ends to the hub (35) of the intermediate casing (3), **characterized in that** the plane formed by the two links (114, 115; 314, 315) of the rear attachment (11; 311) is inclined upstream with respect to the plane of the exhaust casing (8).

2. The suspension as claimed in claim 1, wherein the rear attachment comprises a cross member (111; 312), the two rear attachment links (114, 115; 314; 315) connecting the ends of the member to the outer shell (83) of the exhaust casing.

3. The suspension as claimed in claim 2, wherein the rear attachment (11; 311) comprises a link for taking up the torque Mx along the axis XX, this link being positioned between the two rear attachment links.

4. The suspension as claimed in claims 2 and 3, wherein the two rear attachment links (114, 115; 314; 315) are connected to the exhaust casing by clevis joints whose lugs lie in a plane which is inclined with respect to the plane of the exhaust casing.

5. The suspension as claimed in any one of the preceding claims, wherein said plane formed by the two rear attachment links cuts the axis of the turbojet engine in the proximity of the center of gravity of the engine.

6. The suspension as claimed in claims 2 to 5, wherein the two thrust bars (12, 12') are fixed at their downstream ends to said cross member (111).

7. The suspension as claimed in claim 6, wherein the two thrust bars (12, 12') are connected to the rear attachment by a rocking lever (210).

8. The suspension as claimed in any one of the preceding claims, wherein the downstream ends of the thrust bars (312, 312') are connected to the pylon (9).

9. The suspension as claimed in claim 8, wherein the thrust bars (312, 312') and the rear suspension links (314, 315) converge on, or in the proximity of, the engine axis at a point of convergence (C).

10. The suspension as claimed in the preceding claim, wherein the point of convergence (C) is located above the height of the engine axis XX and at a distance of less than a quarter of the fan diameter from this axis.

11. The suspension as claimed in claim 1, wherein the two thrust bars (212, 212') are fixed at their downstream ends to the pylon by the front attachment (210).

12. The suspension as claimed in claim 11, wherein the front attachment (210) is connected to the hub (35) of the intermediate casing.

13. The suspension as claimed in claim 11 or 12, wherein the plane of the thrust bars (212, 212') and the plane of the two rear attachment links (114, 115) converge on, or in the proximity of, the engine axis at a point of convergence (C).

14. The suspension as claimed in the preceding claim, wherein the point of convergence (C) is located above the height of the engine axis XX and at a distance of less than a quarter of the fan diameter from this axis.

15. The suspension as claimed in any one of claims 1 to 10, wherein the front attachment (10) comprises a cross member and two front attachment links connecting the member to the shell of the intermediate casing.

16. The suspension as claimed in claim 15, wherein the front attachment (10) comprises a link for taking up the torque Mx along the axis XX, this link being positioned between the two front attachment links.

17. The suspension as claimed in either of claims 15 and 16, wherein the front attachment has a system for taking up the engine torque Mx along the axis XX by means of a link of the boomerang type.

18. A turbojet engine for an aircraft, **characterized in that** it has a suspension as claimed in any one of claims 1 to 17.

## Patentansprüche

1. Isostatische Aufhängung eines Triebwerks an einen Mast (9) eines Luftschiffs, wobei das Triebwerk einen vorderen Fan (2) aufweist, ein Zwischengehäuse (3), nachgelagert dem Fan mit einem äußeren Ring (34) und ein Nabenstück (35), untereinander verbunden durch radiale Arme (36), und ein Abgasgehäuse (8) mit einem äußeren Ring (83) auf einer gleichen Achse XX, wobei die Aufhängung eine vordere Befestigung (10; 210) auf dem Zwischengehäuse umfasst, eine hintere Befestigung (11; 311) mit mindestens zwei Verbindungsstangen (114, 115; 314, 315) zur hinteren Befestigung, verbunden mit dem äußeren Ring (83) des Abgasgehäuses (8), wobei ein Paar Gelenkstangen (12, 12'; 212, 212'; 312, 312') zur Übertragung des Schubs dem Nabenstück (35) des Zwischengehäuses (3) vorgelagert befestigt ist, **dadurch gekennzeichnet, dass** die Ebene, gebildet von den zwei Verbindungsstangen (114, 115; 314, 315) der hinteren Befestigung (11; 311) bezüglich der Ebene des Abgasgehäuses (8) zur vorgelagerten Position geneigt ist.

2. Aufhängung nach Anspruch 1, wobei die hintere Befestigung einen Querträger (111; 312) umfasst, wobei die zwei Verbindungsstangen (114, 115; 314; 315) zur hinteren Befestigung die Enden des Trägers mit dem äußeren Ring (83) des Abgasgehäuses verbinden.

3. Aufhängung nach Anspruch 2, wobei die hintere Befestigung (11; 311) eine Verbindungsstange zur Aufnahme des Drehmoments Mx entlang der Achse XX, angebracht zwischen den zwei Verbindungstangen zur hinteren Befestigung, umfasst.

4. Aufhängung nach einem der Ansprüche 2 und 3, wobei die zwei Verbindungsstangen (114, 115; 314; 315) zur hinteren Befestigung mit dem Abgasgehäuse durch Deckelverbindungen verbunden sind, deren Lappen in einer Ebene angeordnet sind, die bezüglich der Ebene des Abgasgehäuses geneigt ist.

5. Aufhängung nach einem der vorhergehenden Ansprüche, wobei die Ebene, gebildet durch die zwei Verbindungsstangen zur hinteren Befestigung, die Achse des Triebwerks in der Nähe des Schwerpunkts des Motors schneidet.

6. Aufhängung nach einem der Ansprüche 2 bis 5, wobei die zwei Gelenkstangen (12, 12') zur Übertragung des Schubs an ihrem nachgelagerten Ende an den Querträger (111) befestigt sind.

7. Aufhängung nach Anspruch 6, wobei die zwei Gelenkstangen (12, 12') zur Übertragung des Schubs mit der hinteren Verbindung durch einen Tragerahmen (210) verbunden sind.

8. Aufhängung nach einem der vorhergehenden Ansprüche, wobei die Gelenkstangen zur Übertragung des Schubs (312, 312') nachgelagert mit dem Mast (9) verbunden sind.

9. Aufhängung nach Anspruch 8, wobei die Gelenkstangen zur Übertragung des Schubs (312, 312') und die Verbindungsstangen (314, 315) der hinteren Aufhängung auf oder in der Nähe der Achse des Motors an einem Konvergenzpunkt (C) zusammenlaufen.

10. Aufhängung nach dem vorhergehenden Anspruch, wobei sich der Konvergenzpunkt (C) in einem Abstand in der Höhe von der Motorachse XX von weniger als einem Viertel des Durchmessers des Fans befindet.

11. Aufhängung nach Anspruch 1, wobei die zwei Gelenkstangen zur Übertragung des Schubs (212, 212') an ihrem nachgelagerten Ende durch die vordere Befestigung (210) an den Mast befestigt sind.

12. Aufhängung nach Anspruch 11, wobei die vordere Befestigung (210) mit dem Nabenstück (35) des Zwischengehäuses verbunden ist.

13. Aufhängung nach Anspruch 11 oder 12, wobei die Ebene der Gelenkstangen (212, 212') zur Übertragung des Schubs und die Ebene der Verbindungsstangen (114, 115) zur hinteren Befestigung auf oder in der Nähe der Achse des Motors an einem Konvergenzpunkt zusammenlaufen (C).

14. Aufhängung nach dem vorhergehenden Anspruch, wobei sich der Konvergenzpunkt (C) in einem Abstand in der Höhe von der Motorachse XX von weniger als einem Viertel des Durchmessers des Fans befindet.

15. Aufhängung nach einem der Ansprüche 1 bis 10, wobei die vordere Befestigung (10) einen Querträger und zwei Verbindungsstangen zur vorderen Befestigung umfasst, die den Träger mit dem Ring des Zwischengehäuses verbinden.

16. Aufhängung nach Anspruch 15, wobei die vordere Befestigung (10) eine Verbindungsstange zur Aufnahme des Drehmoments Mx entlang der Achse XX zwischen den zwei Verbindungsstangen zur vorderen Befestigung umfasst.

17. Aufhängung nach einem der Ansprüche 15 und 16, wobei die vordere Befestigung über ein System zur Aufnahme des Motordrehmoments Mx entlang der Achse XX durch eine Verbindungstange des Typs Bumerang aufweist.

18. Triebwerk für ein Luftschiff, **dadurch gekennzeichnet, dass** es eine Aufhängung nach einem der Ansprüche 1 bis 17 umfasst.
